# EUROPÄISCHE PATENTSCHRIFT

(11) **EP 0 399 353 B1**
(45) Veröffentlichungstag und Bekanntmachung des Hinweises auf die Patenterteilung: **08.09.1993**
(21) Anmeldenummer: 90109215.5
(22) Anmeldetag: 16.05.1990
(51) Int. Cl.: E06B 7/23

(54) **Dichtung für Container, insbesondere Kühlcontainer**
Sealing strip for container, especially for cold storage container
Joint d'étanchéité pour conteneur, en particulier pour conteneur réfrigérateur

(30) Priorität: 25.05.1989 DE 3917054
(43) Veröffentlichungstag der Anmeldung: 28.11.1990
(73) Patentinhaber: PHOENIX AKTIENGESELLSCHAFT, 21079 Hamburg (DE); GRAAFF Gesellschaft mit beschränkter Haftung, D-31008 Elze (DE)
(72) Erfinder: Seidenstücker, Bernhard, Dipl.-Ing., D-3250 Hameln 1 (DE); Fuchs, Hans-Georg, techn. Angest., D-2150 Buxtehude (DE); Glang, Siegfried, Ing., D-2104 Hamburg 92 (DE); Luszek, Gerda, techn. Zeichnerin, D-2117 Dohren (DE)

(56) Entgegenhaltungen:
- GB-A- 2 195 135
- US-A- 4 015 368
- US-A- 4 119 325
- US-A- 4 527 807

## Beschreibung

Die Erfindung betrifft eine Dichtung für Container, insbesondere Kühlcontainer, gemäß Oberbegriff des Anspruchs 1 (Merkmalsgruppen a bis f).

Eine Dichtung für Container ist aus der DE-C-19 22 789 und der DE-A-38 08 520 bekannt. Dabei wird die Container-Dichtung mittels eines mechanischen Befestigungssystems in Form von Zusatzleisten mit Schrauben, Popnieten oder dgl. an der Stirnseite der Tür bzw. des Türflügels verankert. Derartige Befestigungselemente führen jedoch nicht selten zu einem baldigen Verschleiß des Elastomerprofils, insbesondere bedingt durch das Zusammenwirken von verschiedenen Werkstoffen mit unterschiedlichen Eigenschaften (z.B. Härte, Ausdehnungskoeffizient, Korrosion). Zudem ist der Austausch der Dichtungen bei Bedarfsfall (Erneuerung, Umrüstung) mit aufwendigen und kostspieligen Zusatzarbeiten verbunden. Darüber hinaus genügen die bisherigen Abdichtungssysteme hinsichtlich ihrer Dichtleistung nicht den höchsten Anforderungen, vor allem dann nicht, wenn zwischen dem Containerinneren und der Containerumgebung ein großes Temperaturgefälle existiert, was bei Kühlcontainern in der Regel der Fall ist (z.B. Innentemperatur: -20°C, Außentemperatur: +30°C).

Aus der US-A-4 119 325 ist eine Dichtung bekannt, die in einer die Container-Tür bzw. den Türflügel stirnseitig umlaufenden C-förmigen Schiene verankert ist, und zwar mittels eines einseitigen Hammerkopfes und eines gegenüberliegenden Widerhakenfußes, wobei Hammerkopf und Widerhakenfuß im Bereich der Halteflansche der C-förmigen Schiene aufsitzen. Durch dieses Verankerungssystem ist der Austausch der Dichtung bei Bedarfsfall gewährleistet.

Aufgabe der Erfindung ist es nun, im Rahmen einer wirksameren Abdichtung, insbesondere bei Kühlcontainern, die Verankerung des Dichtungsprofils aus elastomerem Werkstoff so zu gestalten, daß trotz leichter Austauschbarkeit eine besonders hohe Ausreißfestigkeit gegeben ist. Darüber hinaus soll ein möglichst hoher Toleranzausgleich beim Abdichten des Spaltes gewährleistet sein. Gelöst wird diese Aufgabe durch das Kennzeichen des Anspruchs 1 (Merkmalsgruppen g bis k)

Die Erfindung wird im folgenden anhand von Ausführungsbeispielen näher erläutert. Es zeigen (in Draufsicht):
- Fig. 1, 2: die Doppeldichtung zwischen Container-Tür und Türpfosten;
- Fig. 3: die C-förmige Schiene und ihre Dimensionsparameter.

Die einzelnen Teile im Bereich des abzudichtenden Spaltes sind:
Container-Tür (1)
Stirnfläche (2) der Container-Tür
Scharnier (3)
Türaußenseite (4)
Türinnenseite (5)
Türpfosten (6)
Eckbereich (7) des Türpfostens
Spalt (8)
Außendichtungsprofil (9) mit Dichtlippen (10, 11)
Außendichtungsprofil (9) mit zusätzlicher Nut (29), die mit Versiegelungsmasse (30) gefüllt ist
Innendichtungsprofil (14) mit Dichtlippen (15, 16)
Innendichtungsprofil (27) mit schlauchförmigem Dichtteil (28)
Hammerkopf (12, 17)
bogenförmiger Widerhakenfuß (13)
Widerhakenfuß (18) in Kombination mit Profilkanal (19)
Schienen (20, 24)
Halteflansche (21, 22, 25, 26)
Schieneneckbereich (23)

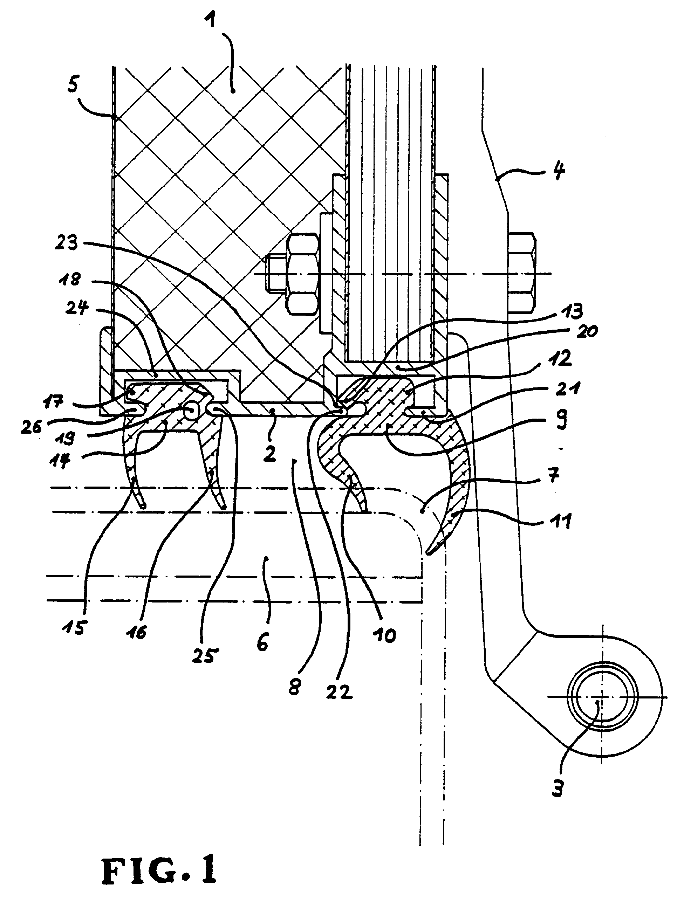

Nach Fig. 1 ist der Hammerkopf (12) des Außendichtungsprofils (9), der auf dem Halteflansch (21) aufsitzt, zur Türaußenseite (4) gerichtet. Der gegenüberliegende bogenförmige (schnabelförmige) Widerhakenfuß (13) verläuft in einem Winkel von etwa 45° auf die Schienenecke (23) zu, wo er mittels des Halteflansches (22) verankert ist. Durch diesen Profilaufbau im Verankerungsbereich der C-förmigen Schiene (20) ist eine besonders hohe Ausreißfestigkeit gewährleistet, was gerade bei dem Außendichtungsprofil (9) von wesentlicher Bedeutung ist. Bei dem Innendichtungsprofil (14) wird neben der Ausreißfestigkeit auch ein möglichst hoher Toleranzausgleich beim Abdichten des Spaltes (8) gefordert. Der Toleranzausgleich wird hier durch den elastischen Widerhakenfuß (18) erreicht. Dieser ist im Querschnitt gesehen im wesentlichen dreiecksförmig gestaltet, in dessen Klemmbereich ein in Profillängsrichtung verlaufender Kanal vorhanden ist, der in etwa höhengleich mit den Halteflanschen (25, 26) angeordnet und dessen Querschnittsfläche ovalförmig ausgebildet ist. Der Hammerkopf (17) des Innendichtungsprofils (14) ist zur Türinnenseite (5) gerichtet. Durch diese Maßnahme ist ebenfalls eine hohe Ausreißfestigkeit beim Innendichtungsprofil gewährleistet.

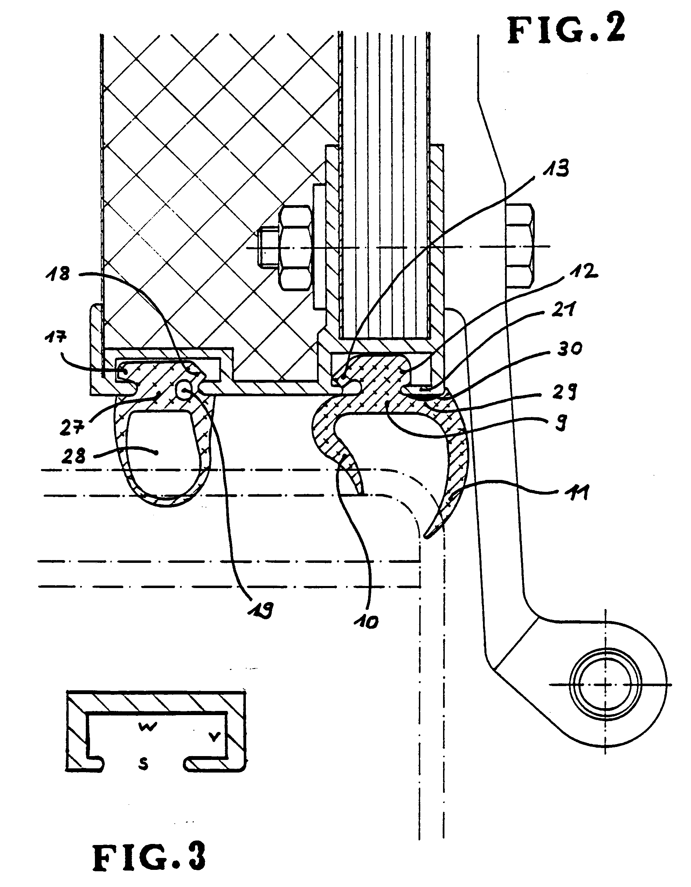

Das Innenprofil (14) nach Fig. 1 weist zwei bogenförmige Dichtlippen (15, 16) auf, die (von der Türaußenseite 4 betrachtet) konkav ausgebildet sind. Nach Fig. 2 ist der Dichtteil des Innenprofils (27) als Schlauch (28) ausgebildet. Bei dieser Variante ist die Dichtleistung und der Toleranzausgleich des Innenprofils besonders ausgeprägt.

Fig. 3 zeigt eine Schiene, die hinsichtlich der Spaltbreite s, Tiefe v und Basisbreite w zweckmäßigerweise folgende Werteparameter aufweist:
Spaltbreite s ≧ 10 mm
Tiefe v (Innen) ≧ 4 mm
Basisbreite w (Innen) ≧ 20 mm

Bei Bedarfsfall ist das Außendichtungsprofil (9) gemäß Fig. 2 noch mit einer in Profillängsrichtung verlaufenden Nut (29) versehen, die mit einer Versiegelungsmasse (30) gefüllt ist.

Im Rahmen dieser Ausführungsbeispiele ist die Spaltdichtung zwischen der Container-Tür und dem Türpfosten beschrieben worden. Ein Container weist jedoch üblicherweise zwei Türflügel auf (DE-A-38 08 520, DE-C-19 22 789), wobei dann selbstverständlich auch der Spalt zwischen den beiden Türflügeln abgedichtet werden muß. In diesem Falle wird beispielsweise der rechte Türflügel (von außen betrachtet) umlaufend (d.h. alle vier Stirnflächen) mit der erfindungsgemäßen Dichtung ausgerüstet. Der linke Türflügel dagegen wird lediglich an drei Stirnflächen mit dieser Dichtung versehen, während die Schienen derjenigen Stirnfläche, die der Stirnfläche des rechten Türflügels gegenüber liegt, mit einem Ausgleichs- bzw. Füllprofil zwecks Schaffung einer glatten Stirnoberfläche ausgerüstet werden. Die vier Rahmenecken werden zweckmäßigerweise nach dem Injection-Molding-Verfahren hergestellt.

## Patentansprüche

1. Dichtung für Container, insbesondere Kühlcontainer, bestehend
a) aus einem strangförmigen Außendichtungsprofil (9) aus elastomerem Werkstoff, das
b) an der Stirnseite (2) der Container-Tür (1) bzw. des Türflügels befestigt ist, das
c) zwei bogenförmige Dichtlippen (10, 11) aufweist, die den Spalt (8) zwischen Container-Tür (1) und Türpfosten (6) bzw. den Spalt zwischen den beiden Türflügeln abdichten, wobei die Außenlippe (11) den Eckbereich (7) des Türpfostens bzw. Türflügels umgreift, und das
d) in einer die Container-Tür (1) bzw. den Türflügel stirnseitig umlaufenden C-förmigen Schiene (20) mit ausreichender Spaltbreite s sowie ausreichender Tiefe v und Basisbreite w verankert ist, und zwar
e) mittels eines einseitigen Hammerkopfes (12), dessen Dicke etwa der Schienen-Tiefe v entspricht, und eines gegenüberliegenden Widerhakenfußes (13), wobei Hammerkopf und Widerhakenfuß im Bereich der Halteflansche (21, 22) aufsitzen und
f) der Hammerkopf (12) des Außendichtungsprofils (9) zur Türaußenseite (4) gerichtet ist,
dadurch gekennzeichnet, daß
g) an der Stirnseite (2) der Container-Tür (1) bzw. des Türflügels ein weiteres strangförmiges Elastomer-Profil (14, 27) als Innendichtung angeordnet ist, das
h) ebenfalls in einer die Container-Tür (1) bzw. den Türflügel stirnseitig umlaufenden C-förmigen Schiene (24) mit ausreichender Spaltbreite s sowie ausreichender Tiefe v und Basisbreite w verankert ist, und zwar
i) mittels eines einseitigen Hammerkopfes (17), dessen Dicke etwa der Schienen-Tiefe v entspricht, und eines gegenüberliegenden Widerhakenfußes (18), wobei Hammerkopf und Widerhakenfuß im Bereich der Halteflansche (25, 26) aufsitzen, daß ferner
j) der Widerhakenfuß (13) des Außendichtungsprofils (9) bogenförmig (schnabelförmig) ausgebildet ist und dabei in einem Winkel von etwa 45° auf die Schienenecke (23) zuverläuft, wobei die Dicke des Widerhakenfußes etwa der halben Hammerkopfdicke entspricht, und daß
k) der Widerhakenfuß (18) des Innendichtungsprofils (14, 27) im Querschnitt gesehen im wesentlichen dreiecksförmig ist, in dessen Klemmbereich ein in Profillängsrichtung verlaufender Kanal (19) angeordnet ist.

2. Dichtung nach Anspruch 1, dadurch gekennzeichnet, daß das Innenprofil (14) zwei bogenförmige Dichtlippen (15, 16) aufweist, die (von der Türaußenseite 4 betrachtet) konkav ausgebildet sind.

3. Dichtung nach Anspruch 1, dadurch gekennzeichnet, daß der Dichtteil des Innenprofils (27) als Schlauch (28) ausgebildet ist.

4. Dichtung nach einem der Ansprüche 1 bis 3, dadurch gekennzeichnet, daß die Schienen (20, 24) eine Mindesttiefe v von 4 mm aufweisen.

5. Dichtung nach einem der Ansprüche 1 bis 4, dadurch gekennzeichnet, daß die Schienen (20, 24) eine Mindestbasisbreite w von 20 mm aufweisen.

6. Dichtung nach einem der Ansprüche 1 bis 5, dadurch gekennzeichnet, daß die Schienen (20, 24) eine Mindestspaltbreite s von 10 mm aufweisen.

7. Dichtung nach einem der Ansprüche 1 bis 6, dadurch gekennzeichnet, daß der Hammerkopf (17) des Innendichtungsprofils (14, 27) zur Türinnenseite (5) gerichtet ist.

8. Dichtung nach einem der Ansprüche 1 bis 7, dadurch gekennzeichnet, daß der Kanal (19) des Innendichtungsprofils (14, 27) in etwa höhengleich mit den Halteflanschen (25, 26) angeordnet ist, wobei seine Querschnittsfläche insbesondere ovalförmig ausgebildet ist.

9. Dichtung nach einem der Ansprüche 1 bis 8, dadurch gekennzeichnet, daß das Außendichtungsprofil (9) zur Türaußenseite (4) hin im Bereich des Halteflansches (21) zusätzlich eine in Profillängsrichtung verlaufende Nut (29) aufweist, die mit einer Versiegelungsmasse (30) gefüllt ist.

10. Dichtung nach einem der Ansprüche 1 bis 9, dadurch gekennzeichnet, daß die Profile (9, 14, 27) aus einer Kautschukmischung auf Basis Polychloropren (CR), Ethylen-Propylen-Dien-Mischpolymerisat (EPDM), Nitrilkautschuk (NBR), Silikonkautschuk oder anderen quell-, witterungs-, chemikalien- und minustemperaturbeständigen (bis -40°C als Zersprödungspunkt) Kautschuktypen besteht.

11. Dichtung nach einem der Ansprüche 1 bis 10, dadurch gekennzeichnet, daß die Profile (9, 14, 27) eine Härte in Shore A von 35 bis 80°, insbesondere von 60 bis 70°, aufweisen.

12. Dichtung nach einem der Ansprüche 1 bis 11, dadurch gekennzeichnet, daß vier strangförmige Profile (9, 14, 27) bzw. drei dieser Profile und ein strangförmiges Ausgleichs- bzw. Füllprofil einen umlaufenden Dichtungsrahmen bilden, dessen Ecken im Injection-Molding-Verfahren hergestellt werden.

## Claims

1. A seal for containers, in particular cooling containers, comprising
a) an elongated outer sealing profile (9) made of elastomeric material which
b) is attached to the end side (2) of the container door (1) and the door wing and
c) comprises two curved sealing lips (10, 11) which seal the gap (8) between the container door (1) and door post (6) and the gap between the two door wings, where the outer lip (11) engages around the corner zone (7) of the door post and door wing and which
d) is secured in a C-shaped bar (20) which extends around the end side of the container door (1) and door wing and which has sufficient gap breadth s and sufficient depth v and base breadth w and this
e) by means of a one-sided hammer head (12), the thickness of which corresponds approximately to the depth v of the bar and by means of an oppositely located barbed foot (13), where the hammer head and the barbed foot are located in the region of the retaining flanges (21, 22) and
f) the hammer head (12) of the outer sealing profile (9) is directed towards the outside (4) of the door,
characterised in that
g) at the end side (2) of the container door (1) and door wing a further elongated elastomeric profile (14, 27) is arranged as inner seal which
h) is likewise secured in a C-shaped bar (24) which extends around the end side of the container door (1) and door wing and which has sufficient gap breadth s and sufficient depth v and base breadth w, and this
i) by means of a one-sided hammer head (17), the thickness of which corresponds approximately to the depth v of the bar, and by means of an oppositely located barbed foot (18), where the hammer head and the barbed foot are located in the region of the retaining flanges (25, 26), that moreover
j) the barbed foot (13) of the outer sealing profile (9) is curved (beak-shaped) and extends towards the corner (23) of the bar at an angle of approximately 45°, where the thickness of the barbed foot corresponds approximately to half the thickness of the hammer head and that
k) considered in cross-section, the barbed foot (18) of the inner sealing profile (14, 27) substantially has the form of a triangle, in the clamping zone of which a channel (19) extending in the longitudinal direction of the profile is arranged.

2. A seal as claimed in Claim 1, characterised in that the inner profile (14) comprises two curved sealing lips (15, 16) which (considered from the outside (4) of the door) are of concave formation.

3. A seal as claimed in Claim 1, characterised in that the sealing portion of the inner profile (27) is in the form of a tube (28).

4. A seal as claimed in one of Claims 1 to 3,
characterised in that the bars (20, 24) have a minimum depth v of 4 mm.

5. A seal as claimed in one of Claims 1 to 4,
characterised in that the bars (20, 24) have a minimum base breadth w of 20 mm.

6. A seal as claimed in one of Claims 1 to 5,
characterised in that the bars (20, 24) have a minimum gap breadth s of 10 mm.

7. A seal as claimed in one of Claims 1 to 6,
characterised in that the hammer head (17) of the inner sealing profile (14, 27) is directed towards the inside (5) of the door.

8. A seal as claimed in one of Claims 1 to 7,
characterised in that the channel (19) of the inner sealing profile (14, 27) is arranged at approximately the same level as the retaining flanges (25, 26), and its cross-sectional surface is in particular oval-shaped.

9. A seal as claimed in one of Claims 1 to 8,
characterised in that in the direction of the outside (4) of the door, in the region of the retaining flange (21), the outer sealing profile (9) additionally comprises a groove (29) which extends in the longitudinal direction of the profile and which is filled with a sealing compound (30).

10. A seal as claimed in one of Claims 1 to 9,
characterised in that the profiles (9, 14, 27) are composed of a rubber mixture based on polychloroprene (CR), ethylene-propylene-diene-copolymer (EPDM), nitrile rubber (NBR), silicon rubber or other types of rubber which are resistant to swelling, weather, chemicals and minus temperatures (down to -40°C as embrittlement point).

11. A seal as claimed in one of Claims 1 to 10,
characterised in that the profiles (9, 14, 27) have a Shore A hardness of 35 to 80°, in particular 60 to 70°.

12. A seal as claimed in one of Claims 1 to 11,
characterised in that four elongated profiles (9, 14, 27) or three of these profiles and one elongated compensating or filler profile form a continuous sealing frame, the corners of which are produced by injection-moulding.

## Revendications

1. Garniture d'étanchéité pour conteneur, en particulier pour conteneur frigorifique, se composant
a) d'un joint d'étanchéité profilé externe (9) en forme de cordon, en matière élastomère qui
b) est fixé sur le chant (2) de la porte (1) du conteneur ou du battant de porte,
c) présente deux lèvres d'étanchéité en arc de cercle (10, 11) qui rendent étanche la fente (8) entre la porte (1) du conteneur et le montant de porte (6) ou la fente entre les deux battants de porte, la lèvre extérieure (11) enveloppant la région d'angle (7) du montant de porte ou du battant de porte, et
d) est ancré dans un rail en C (20) qui s'étend tout autour du chant de la porte (1) du conteneur ou du battant de porte et présente une largeur de fente s suffisante, ainsi qu'une profondeur v et une largeur de fond w suffisantes, et cela
e) au moyen d'une "tête de marteau" unilatérale (12), dont l'épaisseur correspond à peu près à la profondeur v du rail, et d'une "panne" (13) opposée, la tête de marteau et la panne s'accrochant dans la région des ailes de retenue (21, 22) et
f) la tête de marteau (12) du joint d'étanchéité profilé externe (9) étant dirigée vers le côté extérieur (4) de la porte,
caractérisée
g) en ce qu'il est disposé, sur le chant (2) de la porte (1) du conteneur ou du battant de porte, en tant que joint d'étanchéité interne, un autre profilé d'élastomère en forme de cordon (14, 27) qui
h) est également ancré dans un rail en C (24) qui s'étend tout autour du chant de la porte (1) du conteneur ou du battant de porte et présente une largeur de fente s suffisante, ainsi qu'une profondeur v et une largeur de fond w suffisantes, et cela
i) au moyen d'une "tête de marteau" unilatérale (17), dont l'épaisseur correspond à peu près à la profondeur v du rail, et d'une "panne" (18) opposée, la tête de marteau et la panne s'accrochant dans la région des ailes de retenue (25, 26),
j) en ce qu'en outre la panne (13) du joint d'étanchéité profilé externe (9) est réalisée en forme d'arc (en forme de bec), pour rencontrer le coin (23) du rail sous un angle d'environ 45°, l'épaisseur de la panne correspondant à peu près à la moitié de l'épaisseur de la tête de marteau, et
k) en ce que la panne (18) du joint d'étanchéité profilé interne (14, 27), vu en coupe transversale, est sensiblement triangulaire et un canal (19), s'étendant dans la direction longitudinale du profilé, est formé dans sa région de serrage.

2. Garniture d'étanchéité selon la revendication 1, caractérisée en ce que le profilé interne (14) présente deux lèvres d'étanchéité en forme d'arc (15, 16) qui (considérées depuis le côté extérieur (4) de la porte) sont réalisées sous forme concave.

3. Garniture d'étanchéité selon la revendication 1, caractérisée en ce que la partie du profilé interne (27) qui fait l'étanchéité est réalisée sous forme de tuyau flexible (28)

4. Garniture d'étanchéité selon l'une quelconque des revendications 1 à 3, caractérisée en ce que les rails (20, 24) ont une profondeur v de 4 mm au minimum.

5. Garniture d'étanchéité selon l'une quelconque des revendications 1 à 4, caractérisée en ce que les rails (20, 24) ont une largeur de fond w de 20 mm au minimum.

6. Garniture d'étanchéité selon l'une quelconque des revendications 1 à 5, caractérisée en ce que les rails (20, 24) ont une largeur de fente s de 10 mm au minimum.

7. Garniture d'étanchéité selon l'une quelconque des revendications 1 à 6, caractérisée en ce que la tête de marteau (17) du joint d'étanchéité profilé interne (14, 27) est dirigée vers le côté intérieur (5) de la porte.

8. Garniture d'étanchéité selon l'une quelconque des revendications 1 à 7, caractérisée en ce que le canal (19) du joint d'étanchéité profilé interne (14, 27) est situé à peu près à la même hauteur que les ailes de retenue (25, 26), sa surface en coupe transversale étant réalisée en particulier sous forme ovale.

9. Garniture d'étanchéité selon l'une quelconque des revendications 1 à 8, caractérisée en ce que le joint d'étanchéité profilé externe (9) présente en plus, vers le côté extérieur (4) de la porte, dans la région de l'aile de retenue (21), une gorge (29) qui s'étend dans la direction longitudinale du profilé et qui est remplie d'une masse de scellement (30).

10. Garniture d'étanchéité selon l'une quelconque des revendications 1 à 9, caractérisée en ce que les profilés (9, 14, 27) sont faits d'un mélange de caoutchoucs à base de polychloroprène (CR), de copolymère éthylène/propylène/diène (EPDM), de caoutchouc nitrile (NBR), de caoutchouc silicone ou d'autres types de caoutchouc résistants au gonflement, aux intempéries, aux produits chimiques et aux températures négatives (jusqu'à un point de fragilité de -40°C).

11. Garniture d'étanchéité selon l'une quelconque des revendications 1 à 10, caractérisée en ce que les profilés (9, 14, 27) présentent une dureté Shore A de 35 à 80°, en particulier de 60 à 70°.

12. Garniture d'étanchéité selon l'une quelconque des revendications 1 à 11, caractérisée en ce que quatre profilés en forme de cordon (9, 14, 27) ou trois de ces profilés et un profilé de bouclage ou de remplissage en cordon forment un cadre d'étanchéité périmétrique dont les angles sont fabriqués par le procédé de moulage par injection.
